# EUROPEAN PATENT APPLICATION

(11) **EP 1 768 206 A1**
(43) Date of publication of application: **28.03.2007**
(21) Application number: 06014457.3
(22) Date of filing: 12.07.2006
(51) Int. Cl.: H01M 8/04, F28B 1/02, B01D 5/00, H01M 8/06

(54) **Fuel cell system with water separator**

(30) Priority: 23.09.2005 KR 20050088985
(71) Applicant: LG Electronics Inc., Yongdungpo-gu Seoul (KR); LG Chem, Ltd., Yongdungpo-Gu Seoul (KR)
(72) Inventor: Youk, Hyung-Kyu, Daejeon (KR); Choi, Hong, Manan-Gu Anyang Gyeonggi-Do (KR)
(74) Representative: TER MEER - STEINMEISTER & PARTNER GbR

(57) **Abstract**

A fuel cell system comprises: a stack unit having a cathode and an anode and generating electricity by an electro-chemical reaction between hydrogen and oxygen; a fuel supply unit for supplying hydrogen to the anode of the stack unit consisting of a reformer, a steam generator and a burner; an air supply unit for supplying air to the cathode of the stack unit; and a gas-liquid separator having a cooling device for contacting off-gas supplied to the fuel supply unit from the stack unit and thereby condensing moisture included in the off-gas. In the fuel cell system, moisture included in the off-gas is removed by the gas-liquid separator and thus combustion inside the burner is actively performed. As the result, steam is stably supplied to a steam reformer and thus a reforming reaction is smoothly performed, thereby enhancing an entire function of the fuel cell system.

## Description

### BACKGROUND OF THE INVENTION

### 1. Field of the Invention

The present invention relates to a fuel cell system, and more particularly, to a fuel cell system having a gas-liquid separator for removing moisture included in off-gas supplied to a burner of a fuel supply unit from a stack unit.

### 2. Description of the Background Art

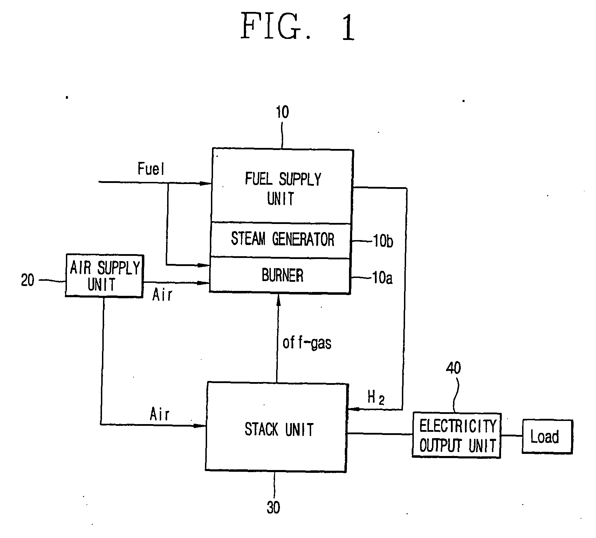

FIG. 1 is a schematic view showing a conventional fuel cell system of a proton exchange membrane fuel cell (PEMFC) method in which a hydrocarbon-based fuel such as LNG, LPG, CH₃OH, gasoline, etc. is used as a fuel by refining only hydrogen by a desulfurizing process, a reforming process, and a hydrogen refining process.

As shown, the conventional fuel cell system comprises a fuel supply unit 10 for supplying only hydrogen extracted from LNG to a stack unit 30, an air supply unit 20 for supplying air to the stack unit 30 and the fuel supply unit 10, a stack unit 30 for generating electricity by supplied hydrogen and air, and an electricity output unit 40 for converting electricity generated from the stack unit 30 into an alternating current and then supplying the alternating current to a load.

As a fuel and steam perform a reforming process in the fuel supply unit 10, hydrogen is generated. In order to generate the steam, the fuel supply unit 10 is provided with a steam generator 10b and a burner 10a for supplying heat to the steam generator 10b.

In order to drive the burner 10a, a fuel is supplied to the burner 10a, and then off-gas remaining in the stack unit 30 after generating electricity is supplied to the burner 10a. However, since the off-gas supplied from the stack unit 30 is humid gas of a high temperature, the burner 10a is not normally operated. Furthermore, the burner 10a may be turned off due to the moisture included in the off-gas. As the result, the reforming process is not smoothly operated, and thus the fuel cell system is degraded.

### BRIEF DESCRIPTION OF THE INVENTION

Therefore, an object of the present invention is to provide a fuel cell system capable of removing moisture included in off-gas supplied to a fuel supply unit from a stack unit.

To achieve these and other advantages and in accordance with the purpose of the present invention, as embodied and broadly described herein, there is provided a fuel cell system, comprising: a stack unit having a cathode and an anode and generating electricity by an electro-chemical reaction between hydrogen and oxygen; a fuel supply unit for supplying hydrogen to the anode of the stack unit; an air supply unit for supplying air to the cathode of the stack unit; and a gas-liquid separator having a cooling device for contacting off-gas supplied to the fuel supply unit from the stack unit and thereby condensing moisture included in the off-gas.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention. In the drawings:
FIG. 1 is a schematic view showing a fuel cell system in accordance with the conventional art;
FIG. 2 is a diagram showing a fuel cell system according to a first embodiment of the present invention;
FIG. 3 is an enlarged plane view showing a gas-liquid separator of FIG. 2;
FIG. 4 is a plane view showing the gas-liquid separator of FIG. 3 of which cover has been removed;
FIG. 5 is a plane view showing that a groove is formed at a cooling pipe of FIG. 3 in a zigzag form;
FIG. 6 is a plane view showing a convexo-concave formed at an inner wall of a container of FIG. 3;
FIG. 7 is a sectional view taken along line VII-VII of FIG. 6;
FIG. 8 is a plane view showing an embossing formed at an inner wall of the container of FIG. 3; and
FIG. 9 is a sectional view taken along line IX-IX of FIG. 8.

### DETAILED DESCRIPTION OF THE INVENTION

Reference will now be made in detail to the preferred embodiments of the present invention, examples of which are illustrated in the accompanying drawings.

Hereinafter, a fuel cell system according to the present invention will be explained with reference to the attached drawings.

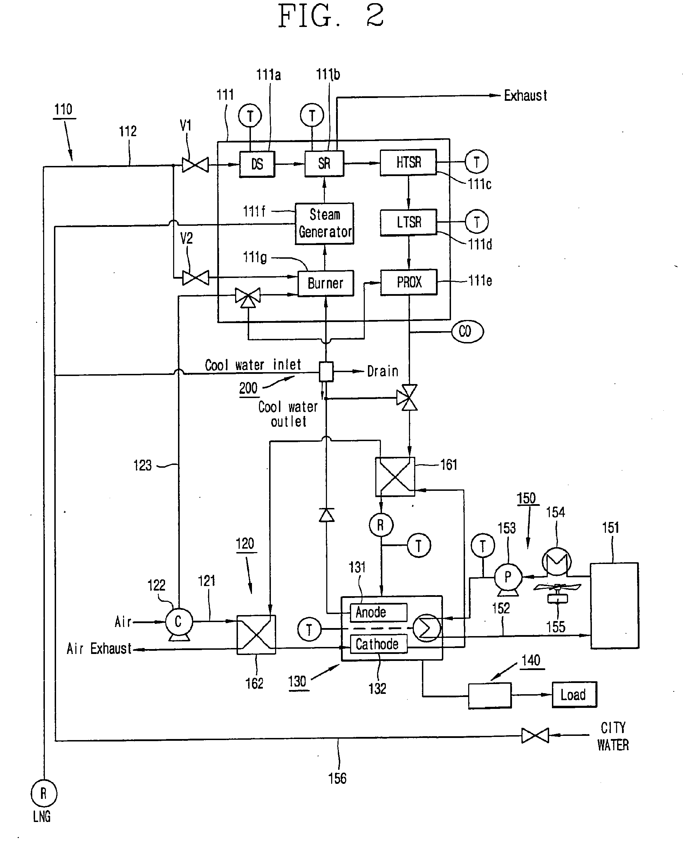

FIG. 2 is a diagram showing a fuel cell system according to a first embodiment of the present invention.

Referring to FIG. 2, the fuel cell system according to the present invention comprises a fuel supply unit 110, an air supply unit 120, a stack unit 130, an electricity output unit 140, a water supply unit 150, and a gas-liquid separator 200.

The fuel supply unit 110 comprises a reformer 111 for refining hydrogen from LNG and thereby supplying the hydrogen to an anode 131 of the stack unit 130, and a pipe 112. The reformer 111 includes a desulfurizing reactor 111a for removing sulfur contained in a fuel, a steam reformer 111b for generating hydrogen by reforming a fuel and steam, a high temperature steam reformer 111c and a low temperature steam reformer 111d respectively for additionally generating hydrogen by re-acting carbon monoxide generated after passing through the steam reformer 111b, a partial oxidation reactor 111e for refining hydrogen by removing carbon monoxide included in a fuel by using air as a catalyst, a steam generator 111f for supplying steam to the steam reformer 111b, and a burner 111g for supplying heat to the steam generator 111f.

The air supply unit 120 for supplying air to a cathode 132 of the stack unit 130 comprises first and second supply lines 121 and 123, and an air supply fan 122. The first air supply line 121 for supplying air in the atmosphere to the cathode 132 is installed between the air supply fan 122 and a second pre-heater 162. The second air supply line 123 for supplying air in the atmosphere to the burner 111g is installed between the air supply fan 122 and the burner 111g.

The stack unit 130 comprises the anode 131 and the cathode 132 so that electric energy and thermal energy can be simultaneously generated by an electro-chemical reaction between hydrogen and oxygen respectively supplied from the fuel supply unit 110 and the air supply unit 120.

The electricity output unit 140 converts electric energy generated from the stack unit 130 into an alternating current, and then supplies the alternating current to a load.

The water supply unit 150 supplies water to the reformer 111 of the fuel supply unit 110 and the stack unit 130, thereby cooling the reformer 111 and the stack unit 130. The water supply unit 150 comprises a water supply container 151 for containing a certain amount of water, a water circulation line 152 for connecting the stack unit 130 and the water supply container 151 by a circulation method, a water circulation pump 153 installed in the middle of the water circulation line 152 and pumping the water inside the water supply container 151, a heat exchanger 154 and a blowing fan 155 installed in the middle of the water circulation line 152 for cooling supplied water, and a city water supply line 156 for supplying water inside the water supply container 151 or city water in drawing to the reformer 111.

The gas-liquid separator 200 removes moisture included in off-gas exhausted from the stack unit 130 and supplied to the burner 111g of the fuel supply unit 110, and is installed between the stack unit 130 and the fuel supply unit 110.

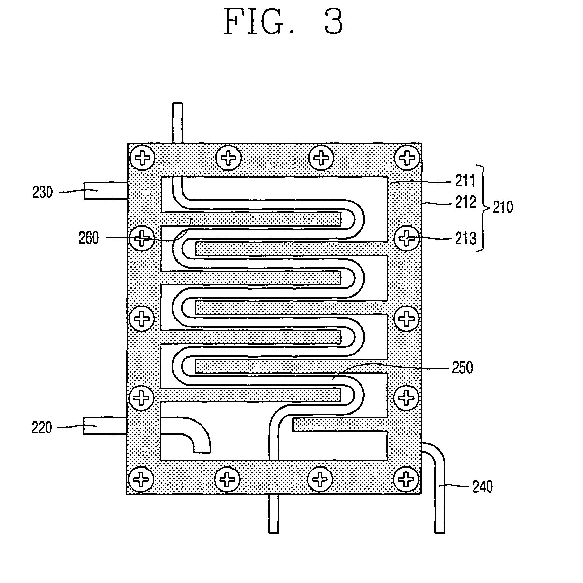

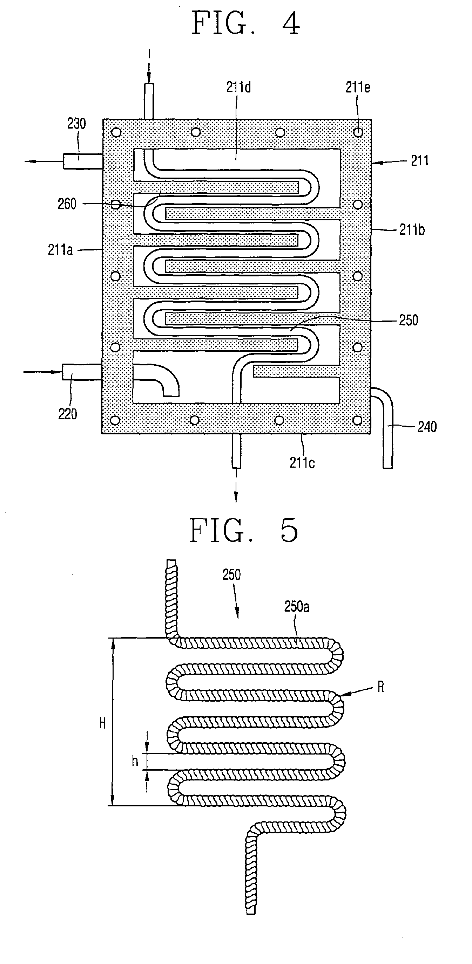

FIG. 3 is an enlarged plane view showing a gas-liquid separator of FIG. 2, FIG. 4 is a plane view showing the gas-liquid separator of FIG. 3 of which cover has been removed, and FIG. 5 is a plane view showing that a groove is formed at a cooling pipe of FIG. 3 in a zigzag form.

Referring to FIGS. 3 and 4, the gas-liquid separator 200 comprises a gas-liquid separating body 210, a gas inlet 220, a gas outlet 230, a moisture outlet 240, a cooling device such as a cooling water pipe 250, and a partition wall 260.

The gas-liquid separating body 210 comprises a container 211 for temporarily storing off-gas, a cover 212 for covering a front surface of the container 211, and a coupling member 213 for coupling the container 211 and the cover 212 each other. Preferably, the cover 212 is formed of a transparent acryl plate so as to easily observe a moisture separation phenomenon generated in the gas-liquid separating body 210 from outside. The coupling member 213 is preferably formed of a screw for convenience of a coupling, and a screw groove 211 e for coupling the screw is formed at a front surface of the container 211.

The gas inlet 220 for introducing off-gas into the gas-liquid separating body 210 is installed to penetrate a lower end of a left wall 211 a of the container 211. An end of the gas inlet 220 is curved towards a lower wall 211c of the container 211 in order to prevent off-gas from being directly exhausted to the gas outlet 230.

The gas outlet 230 is used to exhaust off-gas of which moisture has been removed in the gas-liquid separating body 210 to the fuel supply unit 110 (refer to FIG. 2). The gas outlet 230 is installed to penetrate the uppermost end of the left wall 211a of the container 211 in order to delay the time that the off-gas is exhausted from the gas-liquid separating body 210.

The moisture outlet 240 for exhausting moisture separated from off-gas is installed at a lower end of a right wall 211b of the container 211, and is connected to the water supply container 151 (refer to FIG. 2).

Referring to FIGS. 4 and 5, the cooling water pipe 250 is installed in the gas-liquid separating body 210, and is formed in the container 211 with a zigzag form having a certain height H in order to enhance a thermal transmission efficiency by increasing a contact area to off-gas.

The cooling water pipe 250 is curved with a certain gap h within an allowance range of a curvature radius R in order to increase a contact area to off-gas with a maximized length in the container 211. Preferably, the cooling water pipe 250 is formed of a SUS material for enhancing a thermal exchange efficiency without rust.

When off-gas comes in contact with an outer circumferential surface of the cooling water pipe 250, the off-gas is liquefied by cold cooling water flowing in the cooling water pipe 250. As the result, the moisture included in the off-gas is condensed and is separated from the off-gas. The separated moisture is exhausted to the water supply container 151 (refer to FIG. 2) through the moisture outlet 240. The cooling water that became hot by a heat exchange with the off-gas can be utilized as supply water for heating.

As shown in FIG. 5, a groove 250a is formed at the outer circumferential surface of the cooling water pipe 250 in a zigzag form in order to increase a contact area to off-gas. It is also possible to form a concavo-convex or an embossing rather than the groove having a zigzag form at the outer circumferential surface of the cooling water pipe 250.

In the preferred embodiment, the cooling water pipe 250 was used in order to condense moisture inside the off-gas. However, it is also possible to construct the cooling device with a radiator, a plurality of pins, etc. serving the cooling water pipe 250.

The partition wall 260 prevents off-gas from being directly exhausted to the gas outlet 230. The partition wall 260 is sequentially protruding from the left wall 211 a to the right wall 211 b of the container 211 in a zigzag form so as to be fitted into the curved cooling water pipe 250. The partition wall 260 can be installed at one of the left wall 211 a and the right wall 211 b. However, the partition wall 260 is preferably installed at both the left wall 211 a and the right wall 211 b so as to more effectively prevent off-gas from being directly exhausted to the gas outlet 230. Preferably, the partition wall 260 is sequentially fitted into the cooling water pipe 250 in a zigzag form for a space utilization.

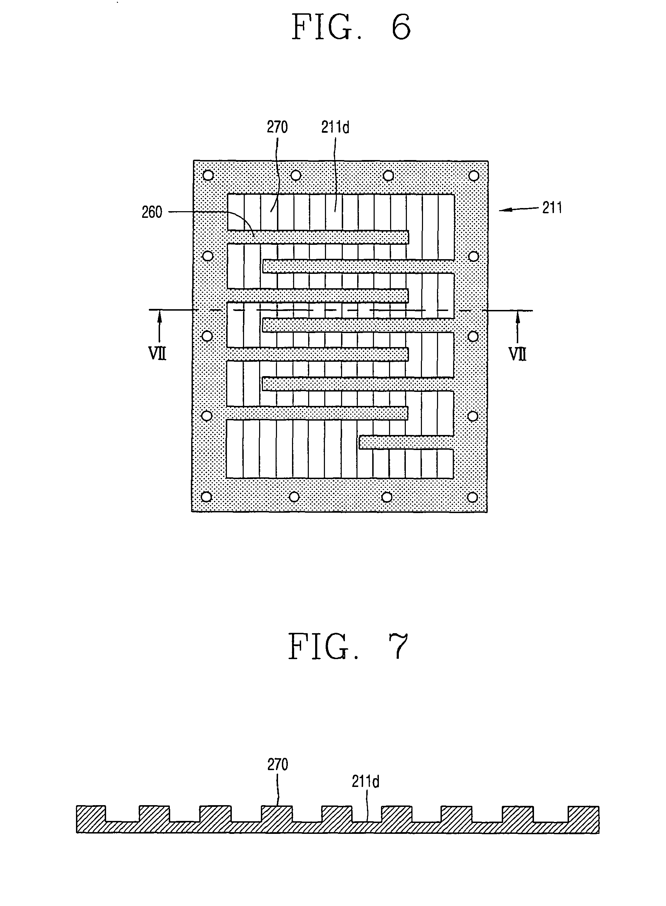

FIG. 6 is a plane view showing a concavo-convex formed at an inner wall of a container of FIG. 3, and FIG. 7 is a sectional view taken along line VII-VII of FIG. 6. Referring to FIGS. 6 and 7, a convexo-concave 270 is formed at an inner wall 211 d of the container 211. The convexo-concave 270 can be integrally formed with the container 211 by a molding material, or can be separately formed thus to be installed at the inner wall 211d of the container 211 by a welding material or an adhesive. The convexo-concave 270 can be also formed at the cover 212. As off-gas comes in contact with the convexo-concave 270, a thermal transmission characteristic of the off-gas is enhanced. Also, as the off-gas passes through the convexo-concave 270, turbulence is generated and thereby moisture included in the off-gas is more effectively separated from the off-gas.

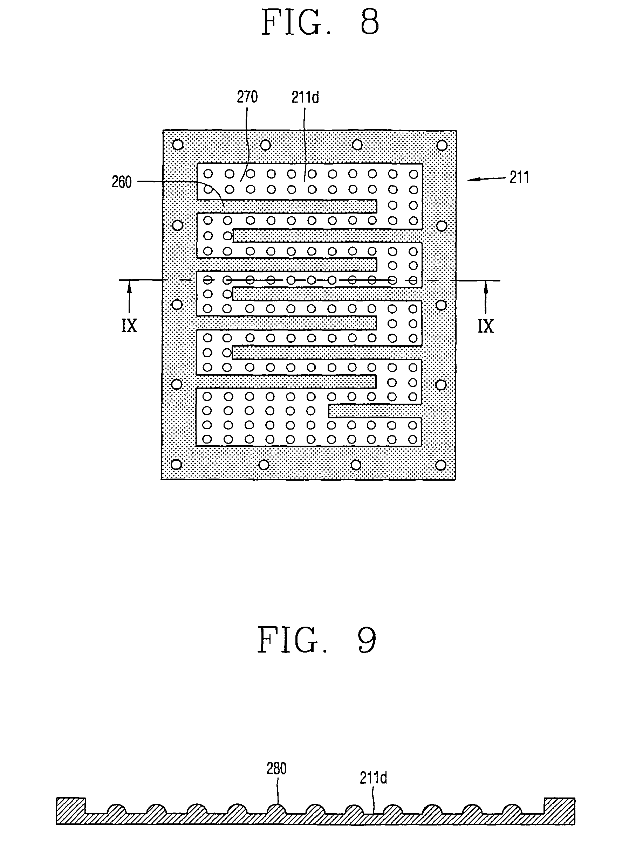

FIG. 8 is a plane view showing an embossing formed at an inner wall of the container of FIG. 3, and FIG. 9 is a sectional view taken along line IX-IX of FIG. 8. Referring to FIGS. 8 and 9, an embossing 280 is formed at an inner wall 211d of the container 211. The embossing 280 can be integrally formed with the container 21 by a molding material, or can be separately formed thus to be installed at an inner wall of the container 211 by a welding or an adhesive. The embossing 280 can be also installed at the cover 212. When off-gas comes in contact with the embossing 280, a thermal transmission characteristic of the off-gas is enhanced. On the contrary, when the off-gas passes through the embossing 280, a turbulence is generated. As the result, moisture included in the off-gas is more effectively separated from the off-gas.

An operation of the fuel cell system according to the present invention will be explained.

Referring to FIG. 2, LNG and steam are reformed in the fuel supply unit 110 and thereby hydrogen is generated. The generated hydrogen is supplied to the anode 131 of the stack unit 130. The air supply unit 120 supplies air to the cathode 132 of the stack unit 130. The stack unit 130 generates electricity by the supplied hydrogen and air, and the generated electricity is converted into an alternating current by the electricity output unit 140 thereby to be supplied to each kind of electric device (load in drawing).

In order to generate steam for a reforming reaction, city water is supplied to the steam generator 111f. Then, off-gas remaining in the stack unit 130 after generating electricity is supplied to the burner 111g in order to generate steam by heating the city water. Herein, moisture included in the off-gas passes through the gas-liquid separator 200 thereby to be removed.

More concretely, as shown in FIG. 4, off-gas is introduced into the gas-liquid separator 210 through the gas inlet 220. The dotted arrow denotes a flow of cooling water, and the solid arrow denotes a flow of off-gas.

The off-gas introduced into the gas-liquid separator 210 comes in contact with an outer circumferential surface of the cooling water pipe 250 via the partition wall 260. Since cold cooling water flows in the cooling water pipe 250, when off-gas comes in contact with the outer circumferential surface of the cooling water pipe 250, the off-gas is liquefied by the cold cooling water and thus moisture included in the off-gas is condensed. As the result, the moisture included in the off-gas is separated form the off-gas. As shown in FIG. 5, a contact area between the off-gas and the cooling water pipe 250 is increased due to the groove 250a having a zigzag form at the outer circumferential surface of the cooling water pipe 250. As shown in FIGS. 7 to 9, a thermal transmission characteristic of the off-gas is enhanced and a turbulence is increased due to the covexo-concave 270 or the embossing 280 formed at the inner wall 211d of the container 211. As the result, moisture included in the off-gas is more effectively separated from the off-gas.

The separated moisture is drained to the water supply container 151 (refer to FIG. 2) via the moisture outlet 240. Herein, the cooling water that became hot by a heat exchange with the off-gas can be utilized as supply water for heating. The off-gas of which moisture has been removed is supplied to the burner 111g of the fuel supply unit 110 through the gas outlet 230. A combustion is more effectively performed in the burner 111g due to the off-gas of which moisture has been removed.

As aforementioned, in the fuel cell system according to the first embodiment of the present invention, moisture included in the off-gas is removed by the gas-liquid separator and thus combustion inside the burner is actively performed. As the result, steam is stably supplied to the steam reformer and thus a reforming reaction is smoothly performed, thereby enhancing the entire function of the fuel cell system.

Furthermore, the cooling water that flows in the cooling water pipe of the gas-liquid separator becomes hot by a heat exchange with the off-gas, and the hot cooling water can be utilized as supply water for heating.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalents of such metes and bounds are therefore intended to be embraced by the appended claims.

## Claims

1. A fuel cell system, comprising:
a stack unit having a cathode and an anode and generating electricity by an electro-chemical reaction between hydrogen and oxygen;
a fuel supply unit for supplying hydrogen to the anode of the stack unit;
an air supply unit for supplying air to the cathode of the stack unit; and
a gas-liquid separator having a cooling device for contacting off-gas supplied to the fuel supply unit from the stack unit and thereby condensing moisture included in the off-gas.

2. The fuel cell system of claim 1, wherein the gas-liquid separator comprises:
a gas-liquid separating body installed on a pipe for connecting the stack unit to a burner of the fuel supply unit;
a gas inlet for introducing off-gas into the gas-liquid separating body;
a gas outlet for exhausting the off-gas of which moisture has been removed to the fuel supply unit; and
a moisture outlet for draining moisture separated from the off-gas.

3. The fuel cell system of claim 1 or 2, wherein the cooling device is implemented as a cooling water pipe constructed in a zigzag form with a certain height in the gas-liquid separating body.

4. The fuel cell system of claim 3, wherein a groove is implemented at an outer circumferential surface of the cooling water pipe.

5. The fuel cell system of claim 3, wherein the gas-liquid separator further comprises a partition wall for preventing the off-gas introduced through the gas inlet from being directly exhausted to the gas outlet.

6. The fuel cell system of claim 5, wherein the partition wall is sequentially protruding in the container in a zigzag form so as to be fitted into the curved cooling water pipe.

7. The fuel cell system of claim 2, wherein the gas-liquid separating body comprises:
a container for temporarily storing the off-gas;
a cover for covering a front surface of the container; and
a coupling member for coupling the container and the cover to each other.

8. The fuel cell system of claim 7, wherein a convexo-concave is formed at an inner wall of the container.

9. The fuel cell system of claim 7, wherein an embossing is formed at an inner wall of the container.
